# EUROPÄISCHE PATENTSCHRIFT

(11) **EP 3 559 725 B1**
(45) Veröffentlichungstag und Bekanntmachung des Hinweises auf die Patenterteilung: **18.12.2024**
(21) Anmeldenummer: 17792002.2
(22) Anmeldetag: 16.10.2017
(51) Int. Cl.: G02B 27/01, G01C 21/36, G08G 1/16

(54) **HEAD-UP-DISPLAY-VORRICHTUNG FÜR EIN KRAFTFAHRZEUG, VERFAHREN, VORRICHTUNG UND COMPUTERLESBARES SPEICHERMEDIUM MIT INSTRUKTIONEN ZUR STEUERUNG EINER ANZEIGE EINER HEAD-UP-DISPLAY-VORRICHTUNG**
HEAD-UP DISPLAY DEVICE FOR A MOTOR VEHICLE, METHOD, DEVICE AND COMPUTER-READABLE RECORDING MEDIUM WITH INSTRUCTIONS FOR CONTROLLING A DISPLAY OF A HEAD-UP DISPLAY DEVICE
DISPOSITIF D'AFFICHAGE TÊTE HAUTE POUR VÉHICULE À MOTEUR, PROCÉDÉ, DISPOSITIF ET SUPPORT D'ENREGISTREMENT LISIBLE PAR ORDINATEUR COMPRENANT DES INSTRUCTIONS POUR COMMANDER UN AFFICHAGE D'UN DISPOSITIF D'AFFICHAGE TÊTE HAUTE

(30) Priorität: 20.12.2016 DE 102016225639
(43) Veröffentlichungstag der Anmeldung: 30.10.2019
(73) Patentinhaber: Volkswagen Aktiengesellschaft, 38440 Wolfsburg (DE)
(72) Erfinder: BAGSCHIK, Silke, 38477 Wolfsburg (DE); LASSOTA, Andreas, 38116 Braunschweig (DE)
(86) Internationale Anmeldenummer: PCT/EP2017/076373
(87) Internationale Veröffentlichungsnummer: WO 2018/114078

(56) Entgegenhaltungen:
- EP-A1- 1 783 531
- DE-A1- 102005 035 412
- DE-A1- 102010 013 532
- DE-A1- 19 813 300

## Beschreibung

Die vorliegende Erfindung betrifft ein Verfahren, eine Vorrichtung und ein computerlesbares Speichermedium mit Instruktionen zur Steuerung einer Anzeige einer Head-up-Display-Vorrichtung für ein Kraftfahrzeug. Die Erfindung betrifft weiterhin eine Head-up-Display-Vorrichtung für ein Kraftfahrzeug sowie ein Kraftfahrzeug, in dem eine solche Head-up-Display-Vorrichtung, ein erfindungsgemäßes Verfahren oder eine erfindungsgemäße Vorrichtung eingesetzt wird.

Unter einem Head-up-Display bzw. einer Head-up-Display-Vorrichtung versteht man ein Anzeigesystem, bei dem der Nutzer seine Blickrichtung beibehalten kann, da die darzustellenden Inhalte in sein Sichtfeld eingeblendet werden. Während derartige Systeme aufgrund ihrer Komplexität und Kosten zunächst im Wesentlichen in der Luftfahrt Verwendung fanden, werden sie inzwischen auch im Automobilbereich in Großserie verbaut.

Head-up-Displays bestehen im Allgemeinen aus einer bildgebenden Einheit, einem optischen Modul und einer Projektionsfläche. Die bildgebende Einheit erzeugt das Bild. Das optische Modul leitet das Bild auf die Projektionsfläche. Diese Fläche ist eine teilweise spiegelnde, lichtdurchlässige Scheibe. Der Benutzer sieht also die von der bildgebenden Einheit dargestellten Inhalte und gleichzeitig die reale Welt hinter der Scheibe. Als Projektionsfläche dient im Automobilbereich oftmals die Frontscheibe, deren gekrümmte Form bei der Darstellung berücksichtigt werden muss. Als Alternative wird zum Teil auch eine zusätzliche Kunststoffscheibe genutzt, die zwischen dem Fahrer und der Frontscheibe auf dem Armaturenbrett angeordnet ist.

Typischerweise werden sowohl statische Informationen als auch kontaktanaloge Informationen dargestellt. Unter statischen Informationen werden solche Informationen verstanden, die sich immer an derselben Stelle im Blickfeld des Fahrers befinden. Beispiele sind die Fahrzeuggeschwindigkeit, Geschwindigkeitsbegrenzungen oder die Motordrehzahl. Kontaktanaloge Informationen werden dem Fahrer so in sein Blickfeld eingeblendet, dass sie ihm als fester Bestandteil der Umwelt erscheinen. Beispielsweise erscheint ein Navigationspfeil direkt auf der Straße.

Vor diesem Hintergrund beschreibt die Druckschrift DE 10 2014 001 270 A1 ein Head-up-Display für ein Kraftfahrzeug, bei dem bestimmte Wiedergabeeigenschaften der dargestellten Objekte von der Blickrichtung des Fahrers abhängen. Mittels einer ersten Sensorik werden Objekte in der Umgebung des Fahrzeuges erfasst. Mittels einer weiteren Sensorik wird die Blickrichtung des Fahrers bestimmt. Die detektierten Objekte werden nun so im Display eingeblendet, dass sie für den Fahrer im Wesentlichen deckungsgleich mit den tatsächlichen Objekten erscheinen, dass also eine kontaktanaloge Darstellung erreicht wird.

Die Druckschrift DE 10 2014 226 860 A1 beschreibt ein Verfahren zum Betreiben eines Head-up-Displays eines Kraftfahrzeuges, bei dem Eigenschaften der Darstellung von der Blickrichtung des Fahrers abhängen. Mittels einer Sensorik wird die Blickrichtung des Fahrers bestimmt. Wenn der Fahrer in Richtung des Head-up-Displays blickt, wird die Darstellung so verändert, dass die darauf angezeigte Information für den Fahrer gut lesbar wird. Andernfalls befindet sich das Head-up-Display in einem Ruhezustand, in dem die Anzeige des Head-up-Displays kaum oder gar nicht vom Fahrer wahrgenommen wird.

Die Druckschrift DE 10 2010 013 532 A1 beschreibt ein Verfahren zum selektiven Projizieren grafischer Bilder an eine transparente Frontscheiben-Head-up-Anzeige eines Fahrzeugs auf der Grundlage einer Notwendigkeit einer verbesserten Sicht. Bei dem Verfahren werden Informationseingänge überwacht, die eine Betriebsumgebung für das Fahrzeug beschreiben. Die Informationseingänge werden verarbeitet, um Anzeigeanforderungen zu erzeugen. Bei der Verarbeitung wird die Notwendigkeit einer verbesserten Sicht auf der Grundlage der Informationseingänge ermittelt. Die Anzeigeanforderungen werden auf der Grundlage der Informationseingänge und der Notwendigkeit einer verbesserten Sicht erzeugt. Auf der Grundlage der Anzeigeanforderungen werden die zu projizierenden grafischen Bilder erzeugt. Diese werden dann an die transparente Frontscheiben-Head-up-Anzeige projiziert.

Die Druckschrift EP 1 783 531 A1 beschreibt eine Projektionsanzeige zur Erzeugung eines virtuellen Bildes in einem Fahrzeug. Die Projektionsanzeige umfasst eine Bilderzeugungseinheit, eine Projektionsfläche, eine Abbildungsoptik zur Projektion des virtuellen Bildes auf die Projektionsfläche, wobei die Projektionsfläche die Windschutzscheibe des Fahrzeugs ist, und eine Detektionseinheit zur Ermittlung einer Blickrichtung eines Fahrers des Fahrzeugs. Die Detektionseinheit beobachtet dabei den Fahrer über die Abbildungsoptik.

Die Druckschrift DE 10 2005 035 412 A1 beschreibt eine Fahrerassistenzvorrichtung in einem Fahrzeug. Die Fahrerassistenzvorrichtung umfasst eine Erfassungseinrichtung zur Ermittlung eines Verlaufs einer Fahrbahn- und/oder Fahrspur vor dem Fahrzeug und eine Anzeige zur Darstellung eines Fahrbahn- und/oder Fahrspurverlaufs. Der Fahrbahn- und/oder Fahrspurverlauf wird in der Anzeige um ein vorgegebenes Maß enger als der Verlauf der ermittelten tatsächlichen Fahrbahn- und/oder Fahrspur dargestellt.

Die Druckschrift DE 198 13 300 A1 beschreibt eine Anzeigevorrichtung für Kraftfahrzeuge. Die Anzeigevorrichtung umfasst ein Head-up-Display zum Projizieren eines virtuellen Bildes vor einer Windschutzscheibe des Kraftfahrzeuges. Die Position des virtuellen Bildes vor der Windschutzscheibe ist in Abhängigkeit wenigstens eines Fahrzustandsparameters veränderlich. Problematisch an der Verwendung einer Head-up-Display-Vorrichtung in einem Kraftfahrzeug kann es sein, dass der Fahrer durch den Blick auf die dargestellten Inhalte unbewusst dazu veranlasst werden kann, das Kraftfahrzeug in Blickrichtung zu steuern.

Es ist eine Aufgabe der Erfindung, verbesserte Lösungen für eine Head-up-Display-Vorrichtung für ein Kraftfahrzeug sowie die Steuerung einer Anzeige einer Head-up-Display-Vorrichtung für ein Kraftfahrzeug aufzuzeigen, die in einer höheren Sicherheit und einem größeren Komfort für den Fahrer des Kraftfahrzeuges resultieren.

Diese Aufgabe wird durch ein Verfahren mit den Merkmalen des Anspruchs 1, durch eine Vorrichtung mit den Merkmalen des Anspruchs 6, durch ein computerlesbares Speichermedium mit Instruktionen gemäß Anspruch 11, durch eine Head-up-Display-Vorrichtung für ein Kraftfahrzeug gemäß Anspruch 12 sowie durch ein Kraftfahrzeug gemäß Anspruch 13 gelöst. Bevorzugte Ausgestaltungen der Erfindung sind Gegenstand der abhängigen Ansprüche.

Der Begriff Computer ist dabei breit zu verstehen. Insbesondere umfasst er auch Steuergeräte und andere prozessorbasierte Datenverarbeitungsvorrichtungen.

Gemäß einem weiteren Aspekt der Erfindung werden ein erfindungsgemäßes Verfahren oder eine erfindungsgemäße Vorrichtung in einer Head-up-Display-Vorrichtung für ein Kraftfahrzeug eingesetzt.

Erfindungsgemäß erfolgt eine seitliche oder auch höhenbezogene, also horizontale oder vertikale Verschiebung der dargestellten Inhalte, d.h. des angezeigten Bildes, entsprechend dem vor dem Kraftfahrzeug liegenden Straßenverlauf. Statt ortsfest relativ zur Frontscheibe zu bleiben wird das Bild bei Kurvenfahrten dynamisch verlagert, um die Informationen im Blickfeld des Fahrers zu halten. Die Head-up-Display-Vorrichtung verändert dazu den Zielpunkt ihrer Projektion entsprechend der zu durchfahrenden Kurve, bei Berg- oder Talfahrt und anderen Fahrmanövern, bei denen die Sichtachse des Fahrers nicht mit einer ortsfesten Projektion auf der Windschutzscheibe übereinstimmt. In Head-up-Display-Vorrichtungen gemäß dem Stand der Technik erscheint das projizierte Bild in einer gewissen Entfernung vor dem Kraftfahrzeug fixiert. Das starr vor dem Kraftfahrzeug stehende Bild scheint z.B. bei einer Kurvenfahrt in den Bergen über dem Abgrund zu schweben, während der Blick des Fahrers eigentlich in die Kurve gerichtet sein sollte, um das Kraftfahrzeug zielgerichtet zu lenken. Die Projektion auf eine feste Position vor dem Fahrzeug auch bei einer Kurvenfahrt kann den Fahrer geradezu dazu verführen, beim Blick auf die dargestellten Inhalte weiter geradeaus zu fahren, anstatt der Kurve zu folgen. Bei Verwendung der erfindungsgemäßen Lösung schaut der Fahrer auch beim Blick auf die dargestellten Inhalte immer in die zukünftige Fahrtrichtung, was zu einer erhöhten Sicherheit führt. Erfindungsgemäß wird der Straßenverlauf vor dem Kraftfahrzeug aus Augenbewegungen des Fahrers bestimmt. Unter der Annahme, dass der Fahrer in die geplante Fahrtrichtung schaut, kann die Position der dargestellten Inhalte entsprechend der Blickrichtung angepasst werden. Dabei werden mit Hilfe eines Filters schnellere, kurzzeitige Augenbewegungen unterdrückt. Head-up-Display-Vorrichtungen sind heute oftmals mit einer Sensorik zur Erfassung von Augen- oder Kopfbewegungen gekoppelt, so dass auf die vorhandene Sensorik zurückgegriffen werden kann.

Gemäß einem Aspekt der Erfindung werden die von der Head-up-Display-Vorrichtung dargestellten Inhalte derart verschoben, dass der Inhalt für den Fahrer zentriert zu seiner Fahrspur erscheint. Auf diese Weise wird der Blick des Fahrers quasi in die Fahrspur hinein gelenkt. Der Fahrer schaut also genau in die Richtung, in die er auch fahren muss, so dass er dem vor ihm liegenden Fahrweg seine volle Aufmerksamkeit widmen kann. Vorzugsweise kann der Nutzer einen Maximalwert für die Verschiebung festlegen. Ebenso ist es möglich, dass der Benutzer die Abhängigkeit der Verschiebung vom Straßenverlauf festlegen oder das Verschieben ganz abschalten kann. Falls der Benutzer beispielsweise größere Verschiebungen als unangenehm empfindet, kann er einstellen, dass die dargestellten Inhalte zwar generell dem Straßenverlauf folgen, aber nur in einem geringeren Ausmaß. In diesem Fall erscheinen dargestellten Inhalte nicht zentriert zur Fahrspur. Dennoch wird der Blick des Fahrers zumindest noch zu einem gewissen Maß in die Fahrspur hinein gelenkt.

Gemäß einem Aspekt der Erfindung erfolgt das Verschieben der von der Head-up-Display-Vorrichtung dargestellten Inhalte durch eine Drehung eines Spiegels oder eines Prismas einer Projektionseinheit der Head-up-Display-Vorrichtung. In einer Head-up-Display-Vorrichtung werden die dargestellten Inhalte durch eine Projektionseinheit erzeugt und mit Hilfe von Spiegeln oder Prismen auf die Frontscheibe projiziert. In der Regel ist zumindest eine dieser optischen Komponenten beweglich gelagert, um die Position der dargestellten Inhalte auf der Frontscheibe anpassen zu können. Dieser Umstand kann genutzt werden, um durch die Drehung der optischen Komponente die dargestellten Inhalte entsprechend dem Straßenverlauf zu positionieren. Alternativ kann die Verschiebung auch durch Verschieben der dargestellten Inhalte auf einer Bilderzeugungseinheit der Head-up-Display-Vorrichtung erfolgen. Die Bilderzeugungseinheit kann dabei Bestandteil der Projektionseinheit der Head-up-Display-Vorrichtung sein, z.B. in Form eines Matrix-Displays. Die Bilderzeugungseinheit kann aber auch in die Frontscheibe oder eine Anzeigefläche des Kraftfahrzeuges integriert sein, beispielsweise in Form einer flexiblen Bildschirm-Folie. Ein Beispiel für eine solche flexible Bildschirm-Folie sind OLED-Display-Folien (OLED: Organic Light-Emitting Diode, organische Leuchtdiode). Hierbei werden die Inhalte direkt auf dem in die Windschutzscheibe integrierten Display vertikal beziehungsweise horizontal verschoben und optimiert.

Vorzugsweise werden ein erfindungsgemäßes Verfahren, eine erfindungsgemäße Vorrichtung oder eine erfindungsgemäße Head-up-Display-Vorrichtung in einem autonom oder manuell gesteuerten Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch eine Head-up-Display-Vorrichtung für ein Kraftfahrzeug;
- Fig. 2: zeigt schematisch ein Verfahren zur Steuerung einer Anzeige einer Head-up-Display-Vorrichtung für ein Kraftfahrzeug;
- Fig. 3: zeigt die von der Head-up-Display-Vorrichtung dargestellten Inhalte aus Sicht des Fahrers ohne eine Verschiebung entsprechend dem Straßenverlauf;
- Fig. 4: zeigt die von der Head-up-Display-Vorrichtung dargestellten Inhalte aus Sicht des Fahrers mit einer Verschiebung entsprechend dem Straßenverlauf;
- Fig. 5: zeigt die von einer Bilderzeugungseinheit der Head-up-Display-Vorrichtung generierten Inhalte bei einer Geradeausfahrt;
- Fig. 6: zeigt die von einer Bilderzeugungseinheit der Head-up-Display-Vorrichtung generierten Inhalte bei einer Kurvenfahrt;
- Fig. 7: zeigt eine erste Ausführungsform einer Vorrichtung zur Steuerung einer Anzeige einer Head-up-Display-Vorrichtung für ein Kraftfahrzeug;
- Fig. 8: zeigt eine zweite Ausführungsform einer Vorrichtung zur Steuerung einer Anzeige einer Head-up-Display-Vorrichtung für ein Kraftfahrzeug; und
- Fig. 9: stellt schematisch ein Kraftfahrzeug dar, in dem eine erfindungsgemäße Lösung realisiert ist.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

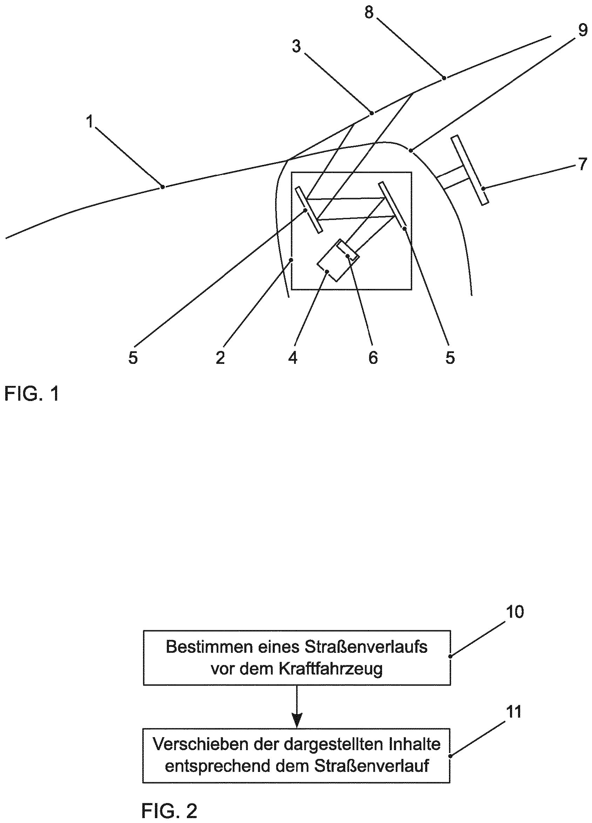

Fig. 1 zeigt schematisch eine Head-up-Display-Vorrichtung 2 für ein Kraftfahrzeug 1, mit deren Hilfe Inhalte 3 auf einer Frontscheibe 8 des Kraftfahrzeuges angezeigt werden können. Die dargestellten Inhalte 3 werden durch eine Projektionseinheit 4 erzeugt und mit Hilfe von Spiegeln 5 auf die Frontscheibe 8 projiziert. In der Regel ist einer der Spiegel 5 beweglich gelagert, um die Position der dargestellten Inhalte auf der Frontscheibe 8 anpassen zu können. Typischerweise erfolgt die Projektion dabei in einen Bereich der Frontscheibe 8 oberhalb des Lenkrades 7. Die Projektionseinheit 4 umfasst eine Bilderzeugungseinheit 6, beispielsweise eine Kombination aus einer LED-Matrix (LED: Light-Emitting Diode, Leuchtdiode) und einem TFT-Farbdisplay (TFT-Display: Thin-Film Transistor-Display, Anzeige mit Dünnschichttransistor-Ansteuerung). Die Head-up-Display-Vorrichtung 2 ist in einem Armaturenbrett 9 des Kraftfahrzeuges 1 verbaut.

Fig. 2 zeigt schematisch ein Verfahren zur Steuerung einer Anzeige einer Head-up-Display-Vorrichtung für ein Kraftfahrzeug. In einem ersten Schritt wird aus Augenbewegungen des Fahrers ein Straßenverlauf vor dem Kraftfahrzeug bestimmt 10, wobei mit Hilfe eines Filters schnellere, kurzzeitige Augenbewegungen unterdrückt werden. Die von der Head-up-Display-Vorrichtung dargestellten Inhalte werden dann entsprechend dem bestimmten Straßenverlauf verschoben 11. Das Verschieben erfolgt dabei derart, dass zumindest ein Inhalt, der keinen direkten Bezug zur Umwelt hat, bei Kurvenfahrten in Kurvenrichtung verschoben dargestellt wird. Vorzugsweise werden die dargestellten Inhalte derart verschoben, dass der Inhalt, der keinen direkten Bezug zur Umwelt hat, für den Fahrer zentriert zu seiner Fahrspur erscheint, seinen Blick also quasi in die Fahrspur hinein lenkt. Das Verschieben der von der Head-up-Display-Vorrichtung dargestellten Inhalte kann beispielsweise durch eine Drehung eines Spiegels oder eines Prismas der Projektionseinheit der Head-up-Display-Vorrichtung oder durch Verschieben der dargestellten Inhalte auf einer Bilderzeugungseinheit der Head-up-Display-Vorrichtung erfolgen. Die Bilderzeugungseinheit kann dabei in eine Frontscheibe oder eine Anzeigefläche des Kraftfahrzeuges integriert sein oder Bestandteil der Projektionseinheit der Head-up-Display-Vorrichtung sein.

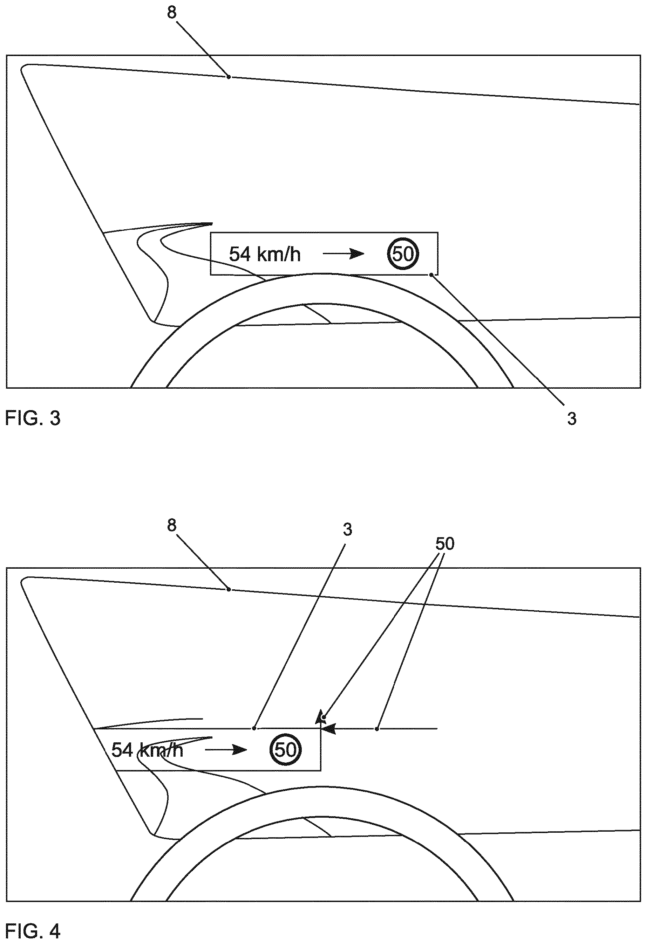

Fig. 3 und Fig. 4 verdeutlichen die Auswirkungen einer Verschiebung der von der Head-up-Display-Vorrichtung auf der Frontscheibe 8 des Kraftfahrzeuges dargestellten Inhalte 3 entsprechend dem Straßenverlauf aus Sicht des Fahrers. In Fig. 3) erfolgt keine Verschiebung der Inhalte 3 entsprechend dem Straßenverlauf, d.h. das projizierte Bild ist in einer gewissen Entfernung vor dem Kraftfahrzeug 1 fixiert. Wie man sieht erscheinen die dargestellten Inhalte 3 versetzt zur Straße, was den Fahrer unbewusst dazu veranlassen kann, beim Blick auf die dargestellten Inhalte weiter geradeaus zu fahren, anstatt der Kurve zu folgen. In Fig. 4) erfolgt hingegen eine Verschiebung der Inhalte 3 entsprechend dem Straßenverlauf, wie dies in Fig. 4 durch die gezeigten Verschiebungsvektoren 50 angedeutet ist. Die dargestellten Inhalte 3 erscheinen in diesem Fall im Wesentlichen zentriert zur Fahrspur, wodurch sich die Fahrsicherheit erhöht. Vorzugsweise wird bei der Verschiebung die Größe des für die dargestellten Inhalte 3 verfügbaren Platzes berücksichtigt. In Fig. 4 kann man erkennen, dass die dargestellten Inhalte 3 gerade noch auf der Frontscheibe 8 Platz finden. Eine Verschiebung noch weiter nach links würde dazu führen, dass die dargestellten Inhalte 3 teilweise abgeschnitten würden. Um dies zu verhindern kann die Verschiebung auf einen Maximalwert begrenzt werden.

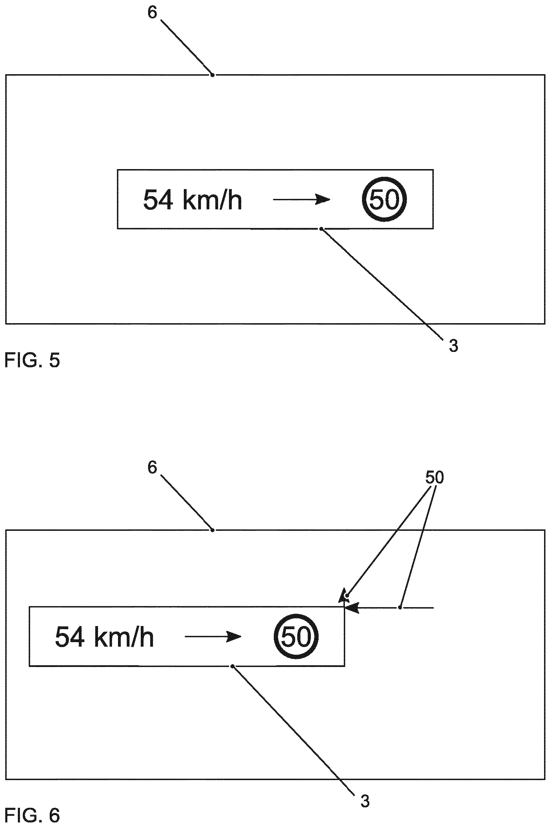

Fig. 5 und Fig. 6 zeigen Beispiele für die von der Bilderzeugungseinheit 6 der Head-up-Display-Vorrichtung generierten Inhalte 3. Fig. 5 zeigt die Inhalte 3 bei einer Geradeausfahrt, Fig. 6 die Inhalte 3 bei einer Kurvenfahrt. Bei der Bilderzeugungseinheit 6 handelt es sich beispielsweise um die bereits in Zusammenhang mit Fig. 1 genannte Kombination aus einer LED-Matrix und einem TFT-Farbdisplay, die in der Projektionseinheit der Head-up-Display-Vorrichtung verbaut ist, oder um eine in die Frontscheibe oder eine Anzeigefläche des Kraftfahrzeuges integrierte Bilderzeugungseinheit 6, z.B. eine flexible Bildschirm-Folie. Während der Geradeausfahrt sind die generierten Inhalte 3 im vorliegenden Beispiel mittig auf der Bilderzeugungseinheit 6 angeordnet. Bei einer Kurve im Straßenverlauf vor dem Fahrzeug sind die generierten Inhalte 3 außermittig auf der Bilderzeugungseinheit 6 angeordnet. Richtung und Größe der Verschiebung, die in Fig. 6 durch die gezeigten Verschiebungsvektoren 50 angedeutet sind, hängen dabei vom Straßenverlauf und gegebenenfalls vom optischen Strahlengang innerhalb der Head-up-Display-Vorrichtung ab.

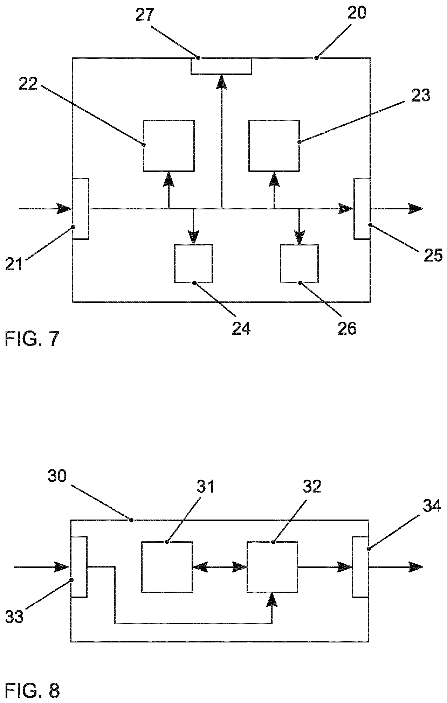

Fig. 7 zeigt eine vereinfachte schematische Darstellung einer ersten Ausführungsform einer Vorrichtung 20 zur Steuerung einer Anzeige einer Head-up-Display-Vorrichtung für ein Kraftfahrzeug. Die Vorrichtung 20 hat einen Eingang 21 zum Empfangen von Daten, die eine Bestimmung eines Straßenverlaufs vor dem Kraftfahrzeug erlauben. Dabei handelt es sich insbesondere um Informationen zu Augenbewegungen des Fahrers. Aus den empfangenen Daten bestimmt eine Auswerteeinheit 22 den Straßenverlauf vor dem Kraftfahrzeug, wobei mit Hilfe eines Filters schnellere, kurzzeitige Augenbewegungen unterdrückt werden. Eine Steuerungseinheit 23 verschiebt dann die von der Head-up-Display-Vorrichtung dargestellten Inhalte entsprechend dem bestimmten Straßenverlauf. Das Verschieben erfolgt dabei derart, dass der Inhalt bei Kurvenfahrten in Kurvenrichtung verschoben dargestellt wird. Das Verschieben der von der Head-up-Display-Vorrichtung dargestellten Inhalte kann beispielsweise durch eine Drehung eines Spiegels oder eines Prismas der Projektionseinheit der Head-up-Display-Vorrichtung oder durch Verschieben der dargestellten Inhalte auf einer Bilderzeugungseinheit der Head-up-Display-Vorrichtung erfolgen. Die Bilderzeugungseinheit kann dabei in eine Frontscheibe oder eine Anzeigefläche des Kraftfahrzeuges integriert sein oder Bestandteil der Projektionseinheit der Head-up-Display-Vorrichtung sein. Die für das Verschieben notwendigen Daten werden über einen Ausgang 25 der Vorrichtung 20 bereitgestellt. Die Auswerteeinheit 22 und die Steuerungseinheit 23 können von einer Kontrolleinheit 24 gesteuert werden. Über eine Benutzerschnittstelle 27 können gegebenenfalls Einstellungen der Auswerteeinheit 22, der Steuerungseinheit 23 oder der Kontrolleinheit 24 geändert werden. Die in der Vorrichtung 20 anfallenden Daten können zudem in einem Speicher 26 der Vorrichtung 20 abgelegt werden, beispielsweise für eine spätere Auswertung. Die Auswerteeinheit 22, die Steuerungseinheit 23 sowie die Kontrolleinheit 24 können als dezidierte Hardware realisiert sein, beispielsweise als integrierte Schaltungen.

Natürlich können sie aber auch teilweise oder vollständig kombiniert oder als Software implementiert werden, die auf einem geeigneten Prozessor läuft. Der Eingang 21 und der Ausgang 25 können als getrennte Schnittstellen oder als eine kombinierte bidirektionale Schnittstelle implementiert sein.

Fig. 8 zeigt eine vereinfachte schematische Darstellung einer zweiten Ausführungsform einer Vorrichtung 30 zur Steuerung einer Anzeige einer Head-up-Display-Vorrichtung für ein Kraftfahrzeug. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

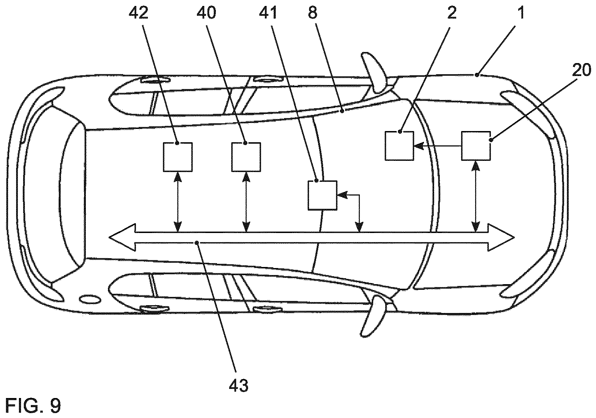

Fig. 9 stellt schematisch ein Kraftfahrzeug 1 dar, in dem eine erfindungsgemäße Lösung realisiert ist. Das Kraftfahrzeug weist eine Head-up-Display-Vorrichtung 2 auf, mit der Informationen auf der Frontscheibe 8 des Kraftfahrzeuges 1 oder auf einer zwischen Fahrer und Frontscheibe 8 angeordneten zusätzlichen Scheibe (nicht gezeigt) dargestellt werden. Die Head-up-Display-Vorrichtung 2 wird von einer Vorrichtung 20 zur Steuerung der Anzeige der Head-up-Display-Vorrichtung angesteuert. Zusätzlich weist das Kraftfahrzeug 1 ein Navigationssystem 40 und eine Umgebungssensorik 41 auf, beispielsweise ein Kamerasystem. Aus Informationen zu Augenbewegungen des Fahrers ermittelt die Vorrichtung 20 einen Straßenverlauf vor dem Kraftfahrzeug 1 und steuert die Head-up-Display-Vorrichtung 2 entsprechend an. Die Übertragung der Daten innerhalb des Kraftfahrzeuges 1 erfolgt mit Hilfe eines Netzwerkes 43, an das weitere Steuergeräte 42 angeschlossen sein können.

### Bezugszeichenliste

- 1: Kraftfahrzeug
- 2: Head-up-Display-Vorrichtung
- 3: Dargestellte Inhalte
- 4: Projektionseinheit
- 5: Spiegel
- 6: Bilderzeugungseinheit
- 7: Lenkrad
- 8: Frontscheibe
- 9: Armaturenbrett
- 10: Bestimmen eines Straßenverlaufs vor dem Kraftfahrzeug
- 11: Verschieben der dargestellten Inhalte entsprechend dem Straßenverlauf
- 20: Vorrichtung
- 21: Eingang
- 22: Auswerteeinheit
- 23: Steuerungseinheit
- 24: Kontrolleinheit
- 25: Ausgang
- 26: Speicher
- 27: Benutzerschnittstelle
- 30: Vorrichtung
- 31: Speicher
- 32: Prozessor
- 33: Eingang
- 34: Ausgang
- 40: Navigationssystem
- 41: Umgebungssensorik
- 42: Steuergerät
- 43: Netzwerk
- 50: Verschiebungsvektor

## Patentansprüche

1. Verfahren zur Steuerung einer Anzeige einer Head-up-Display-Vorrichtung (2) für ein Kraftfahrzeug (1), mit den Schritten:
- Generieren von Inhalten (3) für eine Darstellung durch die Head-up-Display-Vorrichtung (2), wobei die generierten Inhalte (3) zumindest eine statische Information beinhalten; und
- Bestimmen (10) eines Straßenverlaufs vor dem Kraftfahrzeug (1);
- Verschieben (11) der von der Head-up-Display-Vorrichtung (2) dargestellten Inhalte (3) entsprechend dem bestimmten Straßenverlauf;
**dadurch gekennzeichnet, dass** der Straßenverlauf aus Augenbewegungen des Fahrers bestimmt wird (10), wobei mit Hilfe eines Filters schnellere, kurzzeitige Augenbewegungen unterdrückt werden;
und dass die dargestellten Inhalte (3) derart verschoben werden, dass sie bei Kurvenfahrten in Kurvenrichtung verschoben dargestellt werden.

2. Verfahren gemäß Anspruch 1, wobei die von der Head-up-Display-Vorrichtung (2) dargestellten Inhalte (3) derart verschoben werden, dass die statische Information für den Fahrer zentriert zu seiner Fahrspur erscheint.

3. Verfahren gemäß Anspruch 1, wobei durch den Fahrer ein Maximalwert für die Verschiebung festlegbar ist.

4. Verfahren gemäß einem der vorherigen Ansprüche, wobei das Verschieben der von der Head-up-Display-Vorrichtung (2) dargestellten Inhalte (3) durch eine Drehung eines Spiegels (5) oder eines Prismas einer Projektionseinheit (4) der Head-up-Display-Vorrichtung (2) oder durch Verschieben der dargestellten Inhalte auf einer Bilderzeugungseinheit (6) der Head-up-Display-Vorrichtung (2) erfolgt.

5. Verfahren gemäß Anspruch 4, wobei die Bilderzeugungseinheit (6) in eine Frontscheibe (8) oder eine Anzeigefläche des Kraftfahrzeuges (1) integriert ist oder Bestandteil der Projektionseinheit (4) der Head-up-Display-Vorrichtung (2) ist.

6. Vorrichtung (20) zur Steuerung einer Anzeige einer Head-up-Display-Vorrichtung (2) für ein Kraftfahrzeug (1), wobei die Vorrichtung (20) aufweist:
- eine Bilderzeugungseinheit (6) zum Generieren von Inhalten (3) für eine Darstellung durch die Head-up-Display-Vorrichtung (2), wobei die generierten Inhalte (3) zumindest eine statische Information beinhalten; und
- eine Auswerteeinheit (22) zum Bestimmen (10) eines Straßenverlaufs vor dem Kraftfahrzeug (1); und
- eine Steuerungseinheit (23) zum Verschieben (11) der von der Head-up-Display-Vorrichtung (2) dargestellten Inhalte (3) entsprechend dem bestimmten Straßenverlauf; **dadurch gekennzeichnet, dass** die Auswerteeinheit (22) eingerichtet ist, den Straßenverlauf aus Augenbewegungen des Fahrers zu bestimmen (10), wobei mit Hilfe eines Filters schnellere, kurzzeitige Augenbewegungen unterdrückt werden;
und dass die Steuerungseinheit (23) eingerichtet ist, die dargestellten Inhalte (3) derart zu verschieben, dass sie bei Kurvenfahrten in Kurvenrichtung verschoben dargestellt werden.

7. Vorrichtung (20) gemäß Anspruch 6, wobei die Steuerungseinheit (23) eingerichtet ist, die von der Head-up-Display-Vorrichtung (2) dargestellten Inhalte (3) derart zu verschieben, dass die statische Information für den Fahrer zentriert zu seiner Fahrspur erscheint.

8. Vorrichtung (20) gemäß Anspruch 6, wobei durch den Fahrer ein Maximalwert für die Verschiebung festlegbar ist.

9. Vorrichtung (20) gemäß einem der Ansprüche 6 bis 8, wobei die Steuerungseinheit (23) eingerichtet ist, das Verschieben der von der Head-up-Display-Vorrichtung (2) dargestellten Inhalte (3) durch eine Drehung eines Spiegels (5) oder eines Prismas einer Projektionseinheit (4) der Head-up-Display-Vorrichtung (2) oder durch Verschieben der dargestellten Inhalte auf einer Bilderzeugungseinheit (6) der Head-up-Display-Vorrichtung (2) zu realisieren.

10. Vorrichtung (20) gemäß Anspruch 9, wobei die Bilderzeugungseinheit (6) in eine Frontscheibe (8) oder eine Anzeigefläche des Kraftfahrzeuges (1) integriert ist oder Bestandteil der Projektionseinheit (4) der Head-up-Display-Vorrichtung (2) ist.

11. Computerlesbares Speichermedium mit Instruktionen, die bei Ausführung durch einen Computer den Computer zur Ausführung der Schritte eines Verfahrens gemäß einem der Ansprüche 1 bis 5 zur Steuerung einer Anzeige einer Head-up-Display-Vorrichtung (2) für ein Kraftfahrzeug (1) veranlassen.

12. Head-up-Display-Vorrichtung (2) für ein Kraftfahrzeug (1), **dadurch gekennzeichnet, dass** sie eine Vorrichtung (20) gemäß einem der Ansprüche 6 bis 10 aufweist oder eingerichtet ist, ein Verfahren gemäß einem der Ansprüche 1 bis 5 zur Steuerung einer Anzeige der Head-up-Display-Vorrichtung (2) auszuführen.

13. Kraftfahrzeug (40), **dadurch gekennzeichnet, dass** es eine Head-up-Display-Vorrichtung (2) gemäß Anspruch 12 oder eine Vorrichtung (20) gemäß einem der Ansprüche 6 bis 10 aufweist oder eingerichtet ist, ein Verfahren gemäß einem der Ansprüche 1 bis 5 zur Steuerung einer Anzeige einer Head-up-Display-Vorrichtung (2) auszuführen.

## Claims

1. Method for controlling a display on a head-up display device (2) for a motor vehicle (1), comprising the steps of:
- generating content (3) for a presentation by the head-up display device (2), the generated content (3) containing at least one piece of static information; and
- determining (10) a road profile in front of the motor vehicle (1);
- shifting (11) the content (3) presented by the head-up display device (2) in accordance with the determined road profile;
**characterized in that** the road profile is determined (10) from eye movements of the driver, a filter being used to reject faster, brief eye movements;
and **in that** the presented content (3) is shifted in such a way that it is presented in a manner shifted in the direction of the bend during cornering.

2. Method according to Claim 1, wherein the content (3) presented by the head-up display device (2) is shifted in such a way that the static information appears to the driver in a manner centred on their lane.

3. Method according to Claim 1, wherein the driver can stipulate a maximum value for the shift.

4. Method according to one of the preceding claims, wherein the content (3) presented by the head-up display device (2) is shifted as a result of a rotation of a mirror (5) or a prism of a projection unit (4) of the head-up display device (2) or as a result of the presented content being shifted on an image generation unit (6) of the head-up display device (2).

5. Method according to Claim 4, wherein the image generation unit (6) is integrated in a windscreen (8) or a display panel of the motor vehicle (1) or is part of the projection unit (4) of the head-up display device (2) .

6. Device (20) for controlling a display on a head-up display device (2) for a motor vehicle (1), wherein the device (20) comprises:
- an image generation unit (6) for generating content (3) for a presentation by the head-up display device (2), the generated content (3) containing at least one piece of static information; and
- an evaluation unit (22) for determining (10) a road profile in front of the motor vehicle (1); and
- a control unit (23) for shifting (11) the content (3) presented by the head-up display device (2) in accordance with the determined road profile;
**characterized in that** the evaluation unit (22) is configured to determine (10) the road profile from eye movements of the driver, a filter being used to reject faster, brief eye movements;
and **in that** the control unit (23) is configured to shift the presented content (3) in such a way that it is presented in a manner shifted in the direction of the bend during cornering.

7. Device (20) according to Claim 6, wherein the control unit (23) is configured to shift the content (3) presented by the head-up display device (2) in such a way that the static information appears to the driver in a manner centred on their lane.

8. Device (20) according to Claim 6, wherein the driver can stipulate a maximum value for the shift.

9. Device (20) according to one of Claims 6 to 8, wherein the control unit (23) is configured to produce the shift in the content (3) presented by the head-up display device (2) as a result of a rotation of a mirror (5) or a prism of a projection unit (4) of the head-up display device (2) or as a result of the presented content being shifted on an image generation unit (6) of the head-up display device (2).

10. Device (20) according to Claim 9, wherein the image generation unit (6) is integrated in a windscreen (8) or a display panel of the motor vehicle (1) or is part of the projection unit (4) of the head-up display device (2) .

11. Computer readable storage medium containing instructions that, when executed by a computer, cause the computer to perform the steps of a method according to one of Claims 1 to 5 to control a display on a head-up display device (2) for a motor vehicle (1).

12. Head-up display device (2) for a motor vehicle (1), **characterized in that** it comprises a device (20) according to one of Claims 6 to 10 or is configured to carry out a method according to one of Claims 1 to 5 to control a display on the head-up display device (2).

13. Motor vehicle (40), **characterized in that** it comprises a head-up display device (2) according to Claim 12 or a device (20) according to one of Claims 6 to 10 or is configured to carry out a method according to one of Claims 1 to 5 to control a display on a head-up display device (2).

## Revendications

1. Procédé permettant de commander un affichage d'un dispositif d'affichage tête haute (2) pour un véhicule automobile (1), comprenant les étapes consistant à :
- générer du contenu (3) pour une représentation par le dispositif d'affichage tête haute (2), le contenu (3) généré contenant au moins une information statique ; et
- déterminer (10) un tracé de la route devant le véhicule automobile (1) ;
- décaler (11) le contenu (3) représenté par le dispositif d'affichage tête haute (2) selon le tracé de la route déterminé ;
**caractérisé en ce que** le tracé de la route est déterminé selon des mouvements oculaires du conducteur (10), dans lequel des mouvements oculaires rapides brefs sont supprimés à l'aide d'un filtre ;
et **en ce que** le contenu (3) représenté est décalé de telle sorte qu'il est représenté décalé dans la direction du virage en cas de conduite dans des virages.

2. Procédé selon la revendication 1, dans lequel le contenu (3) représenté par le dispositif d'affichage tête haute (2) est décalé de telle sorte que l'information statique apparaît pour le conducteur comme centrée sur sa voie de circulation.

3. Procédé selon la revendication 1, dans lequel le conducteur peut fixer une valeur maximale pour le décalage.

4. Procédé selon l'une quelconque des revendications précédentes, dans lequel le décalage du contenu (3) représenté par le dispositif d'affichage tête haute (2) est effectué par une rotation d'un miroir (5) ou d'un prisme d'une unité de projection (4) du dispositif d'affichage tête haute (2) ou par un décalage du contenu représenté sur une unité de formation d'image (6) du dispositif d'affichage tête haute (2).

5. Procédé selon la revendication 4, dans lequel l'unité de formation d'image (6) est intégrée dans un pare-brise (8) ou une surface d'affichage du véhicule automobile (1) ou fait partie de l'unité de projection (4) du dispositif d'affichage tête haute (2).

6. Dispositif (20) permettant de commander un affichage d'un dispositif d'affichage tête haute (2) pour un véhicule automobile (1), le dispositif (20) présentant :
- une unité de formation d'image (6) pour générer du contenu (3) pour une représentation par le dispositif d'affichage tête haute (2), le contenu généré (3) contenant au moins une information statique ; et
- une unité d'évaluation (22) pour déterminer (10) un tracé de la route devant le véhicule automobile (1) ; et
- une unité de commande (23) pour décaler (11) le contenu (3) représenté par le dispositif d'affichage tête haute (2) selon le tracé de la route déterminé ;
**caractérisé en ce que** l'unité d'évaluation (22) est conçue pour déterminer (10) le tracé de la route selon les mouvements oculaires du conducteur, dans lequel des mouvements oculaires rapides brefs sont supprimés à l'aide d'un filtre ;
et **en ce que** l'unité de commande (23) est conçue pour décaler le contenu (3) représenté de telle sorte qu'il apparaît décalé dans la direction du virage en cas de conduite dans des virages.

7. Dispositif (20) selon la revendication 6, dans lequel l'unité de commande (23) est conçue pour décaler le contenu (3) représenté par le dispositif d'affichage tête haute (2) de telle sorte que l'information statique apparaît pour le conducteur comme centrée par rapport à sa voie de circulation.

8. Dispositif (20) selon la revendication 6, dans lequel le conducteur peut fixer une valeur maximale pour le décalage.

9. Dispositif (20) selon l'une quelconque des revendications 6 à 8, dans lequel l'unité de commande (23) est conçue pour réaliser le décalage du contenu (3) représenté par le dispositif d'affichage tête haute (2) par une rotation d'un miroir (5) ou d'un prisme d'une unité de projection (4) du dispositif d'affichage tête haute (2) ou par un décalage du contenu représenté sur une unité de formation d'image (6) du dispositif d'affichage tête haute (2).

10. Dispositif (20) selon la revendication 9, dans lequel l'unité de formation d'image (6) est intégrée dans un pare-brise (8) ou une surface d'affichage du véhicule automobile (1) ou fait partie de l'unité de projection (4) du dispositif d'affichage tête haute (2) .

11. Support de stockage lisible par ordinateur, comprenant des instructions qui, lorsqu'elles sont exécutées par un ordinateur, font que l'ordinateur exécute les étapes d'un procédé selon l'une quelconque des revendications 1 à 5 pour commander un affichage d'un dispositif d'affichage tête haute (2) pour un véhicule automobile (1).

12. Dispositif d'affichage tête haute (2) pour un véhicule automobile (1), **caractérisé en ce qu'**il présente un dispositif (20) selon l'une quelconque des revendications 6 à 10 ou est conçu pour exécuter un procédé selon l'une quelconque des revendications 1 à 5 pour commander un affichage du dispositif d'affichage tête haute (2).

13. Véhicule automobile (40), **caractérisé en ce qu'**il présente un dispositif d'affichage tête haute (2) selon la revendication 12 ou un dispositif (20) selon l'une quelconque des revendications 6 à 10 ou est conçu pour exécuter un procédé selon l'une quelconque des revendications 1 à 5 pour commander un affichage d'un dispositif d'affichage tête haute (2).
